(19) Europäisches Patentamt
European Patent Office
Office européen des brevets

(11) EP 1 268 579 B1

(12) **EUROPEAN PATENT SPECIFICATION**

(45) Date of publication and mention of the grant of the patent:
**20.04.2005 Bulletin 2005/16**

(21) Application number: **00984478.8**

(22) Date of filing: **13.12.2000**

(51) Int Cl.[7]: **C08F 18/16**, C08F 290/06, G02B 1/04

(86) International application number:
**PCT/US2000/034224**

(87) International publication number:
**WO 2001/042321 (14.06.2001 Gazette 2001/24)**

(54) **POLYMERIZABLE POLYOL(ALLYL CARBONATE) COMPOSITIONS**

POLYMERISIERBARE POLYOL(ALLYLCARBONAT)ZUSAMMENSETZUNG

COMPOSITIONS DE POLYOL(ALLYL CARBONATE) POLYMERISABLES

(84) Designated Contracting States:
**AT BE CH CY DE DK ES FI FR GB GR IE IT LI LU MC NL PT SE TR**

(30) Priority: **13.12.1999 US 459796**

(43) Date of publication of application:
**02.01.2003 Bulletin 2003/01**

(73) Proprietor: **PPG Industries Ohio, Inc.**
**Cleveland, OH 44111 (US)**

(72) Inventor: **NAGPAL, Vidhu, J.**
**Murrysville, PA 15668 (US)**

(74) Representative:
**Sternagel, Fleischer, Godemeyer & Partner**
**Patentanwälte**
**Braunsberger Feld 29**
**51429 Bergisch Gladbach (DE)**

(56) References cited:
**US-A- 5 235 014** **US-A- 5 236 978**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 268 579 B1

## Description

The present invention relates to a polymerizable composition. More particularly, the present invention relates to a polymerizable composition comprising polyol(allyl carbonate) monomer and a urethane having at least two allyl or substituted allyl groups. The present invention relates also to polymerizates, e.g., lenses, obtained from the polymerizable compositions.

Polymerizable organic compositions based on polyol(allyl carbonate), particularly diethylene glycol bis(allyl carbonate), and polymerizates obtained therefrom are well known in the art. Polymerizates of polymerizable organic compositions based on homopolymers of diethylene glycol bis(allyl carbonate) possess excellent clarity, good flexibility and abrasion resistance. Examples of applications for which such polymerizates may be used include, ophthalmic lenses, sunglasses, and automotive and aircraft transparencies. It has been observed that tinting of polymerizates prepared from such compositions by surface impregnation of dyes can, in certain instances, result in an uneven tinting of the surface. Such uneven tinting is referred to as tinting failure.

When tinting failure occurs, it is often manifested as visually observable defects on the tinted surface(s) of the polymerizate, which are commonly referred to as "ferns" or "moons." In the case of tinted ophthalmic lenses, such as tinted ophthalmic lenses having a positive diopter, i.e., plus lenses, and non-corrective lenses, e.g., sunglasses, such tinting failure often results in rejection and scrapping of the tinted lens. A solution to tinting failure is desirable in order to avoid the economic loss that results from the scrapping of lenses having tinting defects.

United States Patent No.'s 4,994,208, 5,084,529, 5,110,881, 5,221,721, 5,236,978 and 5,246,630 describe polymerizable compositions composed of polyol(allyl carbonate) monomer and at least 10 weight percent of aliphatic polyurethanes, the terminal portions of which contain allyl functional groups. United States Patent No. 5,200,483 describes organic resin compositions containing polyol(allyl carbonate) monomer and a mixture of aliphatic urethanes, the terminal portions of which contain allyl or acrylyl functional groups.

It has now been discovered that cured polymerizates prepared from the polymerizable compositions of the present invention are substantially free of tinting defects, for example, tinting defects referred to in the art as ferns or moons. In accordance with the present invention there is provided a polymerizable composition comprising:

(a) from 51 to 99.9 percent by weight based on the total weight of the polymerizable composition of a radically polymerizable first monomer represented by the following general formula I,

I

$$R\text{- }[\text{-}O\text{-}C(O)\text{-}O\text{-}R_1]_i$$

wherein R is a polyvalent residue of a polyol having at least two hydroxy groups, $R_1$ is an allyl or substituted allyl group, and i is a whole number from 2 to 4; and

(b) from 0.1 to 49 percent by weight based on the total weight of the polymerizable composition of a radically polymerizable second monomer represented by the following general formula II,

II

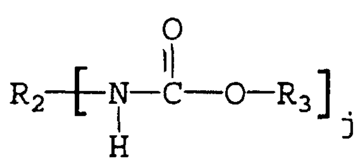

wherein $R_2$ is a polyvalent linking group that is free of urethane linkages; $R_3$ is a residue of a material having a single hydroxy group and at least one allyl group, $R_3$ being free of urethane linkages, acryloyl groups and methacryloyl groups; and j is a number from 2 to 4, e.g., 2, 3 or 4.

The features that characterize the present invention are pointed out with particularity in the claims, which are annexed to and form a part of this disclosure. These and other features of the invention, its operating advantages and the specific objects obtained by its use will be more fully understood from the following detailed description and the accompanying illustrative drawing.

Other than in the operating examples, or where otherwise indicated, all numbers expressing quantities of

ingredients, reaction conditions, etc. used in the specification and claims are to be understood as modified in all instances by the term "about."

BRIEF DESCRIPTION OF THE DRAWING

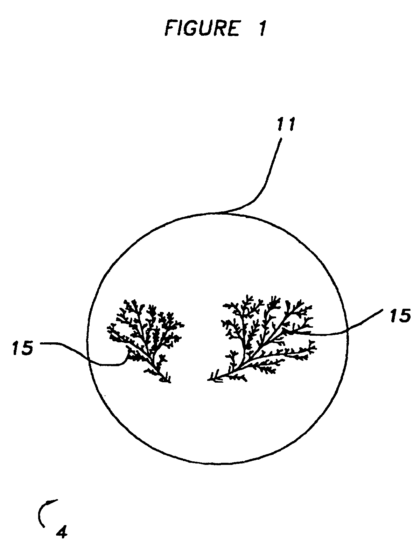

Figure 1 is a representation of a negative image of a tinted lens having tinting defects.

DETAILED DESCRIPTION OF THE INVENTION

In an embodiment of the present invention, the second monomer described with reference to general formula II is present in the polymerizable compositions in an amount at least sufficient such that polymerizates prepared from such compositions are substantially free of tinting defects. As used herein and in the claims, the term "tinting defects" and similar terms refer generally to a visually observable uneven distribution of dye over the surface of a tinted polymerizate, such as a tinted lens. More particularly, tinting defects are often visually observable as lighter colored or untinted surface patterns, sometimes in the form of ferns or moons.

Tinting defects in the form of ferns can be further described with reference to Figure 1. The tinted polymerizate 4 of Figure 1 is a tinted plus lens 11, prepared from diethylene glycol bis(allyl carbonate) monomer, and having tinting defects 15 thereon. For purposes of illustration, the tinting defects 15 of Figure 1 are shown as a negative image. As used herein, by "plus lens" is meant a lens having a positive (+) diopter, i.e., a lens having a positive focal length or real focal point. The tinting defects shown in the lens depicted in Figure 1 were observed in a lens having a plus five (+5) diopter.

Tinting defects in the form of moons (not shown in Figure 1) are typically observed as a series of concentric circles of varying tint strength on the surface of the tinted lens. In some instances a tinted lens will exhibit a combination of both moon and fern type tinting defects.

The occurrence of tinting defects with polymerizates prepared from polyol(allyl carbonate) monomers is a largely statistical phenomenon. Accordingly, in order to determine if a polymerizable composition can be used to prepare polymerizates that are "substantially free of tinting defects," more than one polymerizate, e.g., several lenses, should be prepared. Optionally, a set of comparative polymerizates may also be prepared under similar conditions, e.g., using the same cure cycle, from a composition that is known to result in tinting defects. The specific number of polymerizates that must be prepared is often determined by trial and error. In the case of ophthalmic lenses, typically between 10 and 100 lenses are prepared to determine if they are substantially free of tinting defects. Such a determination is described in further detail in the Examples herein. Typically, a set of polymerizates, e.g., 100 ophthalmic plus lenses, prepared from a polymerizable composition according to the present inention, is considered to be substantially free of tinting defects if 10 percent or less, preferably 5 percent or less, and more preferably 0 percent of the tinted polymerizates have tinting defects, such as ferns.

Second monomer (b) is present in the polymerizable composition of the present invention in a minor amount (e.g., from 0.1 percent by weight to 49 percent by weight, based on the total weight of the composition). Typically, second monomer (b) is present in the composition of the instant invention in an amount of at least 0.1 percent by weight, preferably at least 0.2 percent by weight, and more preferably at least 0.3 percent by weight, based on the total weight of the composition. Second monomer (b) is also typically present in the composition of the present invention in an amount of less than 10 percent by weight, preferably less than 5 percent by weight and more preferably less than 3 percent by weight, based on the total weight of the composition. The amount of second monomer (b) present in the composition of the present invention may range between any combination of these values, inclusive of the recited values, e.g., from 0.1 percent by weight to 10 percent by weight or from 0.3 percent by weight to 3 percent by weight, based on the total weight of the composition.

With reference to general formula II, second monomer (b) is distinguishable from polyurethanes having terminal allyl functional groups as described in, for example, United States Patent No.'s 4,994,208, 5,084,529, 5,110,881, 5,221,721, 5,236,978 and 5,246,630. In general formula II, $R_2$ and $R_3$ are each free of urethane linkages, more particularly, $R_2$ and $R_3$ are each free of internal urethane linkages. As used herein and in the claims, the term "urethane linkage" is meant to refer to the following structural linkage, -N(H)-C(O)-O-. In the case when $R_2$ is a residue of a polyisocyanate, second monomer (b) can be described as a polyisocyanate that is capped with the mono-hydroxy functional material of which $R_3$ is a residue.

Depending on the method by which second monomer (b) is prepared, $R_2$ may be a residue of, for example, a polyisocyanate, i.e., a material having at least two isocyanate groups, or a polyamine, i.e., a material having at least two primary amine groups. When the second monomer is prepared by capping a polyisocyanate with the mono-hydroxy functional material of which $R_3$ is a residue, $R_2$ is a residue of a polyisocyanate. The second monomer may also be prepared by first reacting the mono-hydroxy functional material of which $R_3$ is a residue with phosgene to form the corresponding chloroformate, which is then reacted with a polyamine, in which case $R_2$ is a residue of a polyamine.

In an embodiment of the present invention, $R_2$ is a residue of a polyisocyanate having at least two isocyanate groups, and the polyisocyanate may be selected from aromatic polyisocyanates, aliphatic polyisocyanates, cycloaliphatic polyisocyanates and mixtures thereof. As used herein and in the claims, the term "polyisocyanate" is meant to be inclusive of dimers and trimers of polyisocyanates, for example, trimers of diisocyanates containing a core isocyanurate ring.

Classes of aromatic polyisocyanates of which $R_2$ may be a residue include, for example, aromatic polyisocyanates wherein the isocyanate groups are not bonded directly to the aromatic ring, e.g., $\alpha,\alpha'$-xylene diisocyanate; and aromatic polyisocyanates wherein the isocyanate groups are bonded directly to the aromatic ring, e.g., benzene diisocyanate.

Examples of aromatic polyisocyanates having isocyanate groups bonded directly to the aromatic ring, of which $R_2$ may be a residue include, but are not limited to, phenylene diisocyanate, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, naphthalene diisocyanate, methylnaphthalene diisocyanate, biphenyl diisocyanate, ortho-tolidine diisocyanate, 4,4'-diphenylmethane diisocyanate, bis(3-methyl-4-isocyanatophenyl)methane, bis(isocyanatophenyl)ethylene, 3,3'-dimethoxy-biphenyl-4,4'-diisocyanate, triphenylmethane triisocyanate, polymeric 4,4'-diphenylmethane diisocyanate, naphthalene triisocyanate, diphenylmethane-2,4,4'-triisocyanate, 4-methyldiphenylmethane-3,5,2',4',6'-pentaisocyanate, diphenylether diisocyanate, bis(isocyanatophenylether)ethyleneglycol, bis(isocyanatophenylether)-1,3-propyleneglycol, benzophenone diisocyanate, carbazole diisocyanate, ethylcarbazole diisocyanate and dichlorocarbazole diisocyanate. Examples of aromatic polyisocyanates wherein the isocyanate groups are not bonded directly to the aromatic ring, of which $R_2$ may be a residue include, but are not limited to, bis(isocyanatoethyl)benzene, $\alpha,\alpha,\alpha',\alpha'$-tetramethylxylene diisocyanate, 1,3-bis(1-isocyanato-1-methylethyl)benzene, bis(isocyanatobutyl)benzene, bis(isocyanatomethyl)naphthalene, bis(isocyanatomethyl) diphenyl ether, bis(isocyanatoethyl)phthalate, mesitylene triisocyanate and 2,5-di(isocyanatomethyl)furan.

Aliphatic polyisocyanates of which $R_2$ may be a residue may be selected from, for example, ethylene diisocyanate, trimethylene diisocyanate, tetramethylene diisocyanate, hexamethylene diisocyanate, octamethylene diisocyanate, nonamethylene diisocyanate, 2,2'-dimethylpentane diisocyanate, 2,2,4-trimethylhexane diisocyanate, decamethylene diisocyanate, 2,4,4,-trimethylhexamethylene diisocyanate, 1,6,11-undecanetriisocyanate, 1,3,6-hexamethylene triisocyanate, 1,8-diisocyanato-4-(isocyanatomethyl)octane, 2,5,7-trimethyl-1,8-diisocyanato-5-(isocyanatomethyl)octane, bis(isocyanatoethyl)-carbonate, bis(isocyanatoethyl)ether, 2-isocyanatopropyl-2,6-diisocyanatohexanoate, lysinediisocyanate methyl ester and lysinetriisocyanate methyl ester.

In an embodiment of the present invention, $R_2$ of general formula II is a residue of a cycloaliphatic polyisocyanate. Examples of cycloaliphatic polyisocyanates of which $R_2$ may be a residue include, but are not limited to, isophorone diisocyanate, cyclohexane diisocyanate, methylcyclohexane diisocyanate, bis(isocyanatomethyl)cyclohexane, bis(isocyanatocyclohexyl)methane, bis(isocyanatocyclohexyl)-2,2-propane, bis(isocyanatocyclohexyl)-1,2-ethane, 2-isocyanatomethyl-3-(3-isocyanatopropyl)-5-isocyanatomethyl-bicyclo[2.2.1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo[2.2.1]-heptane, 2-isocyanatomethyl-2-(3-isocyanatopropyl)-6-isocyanatomethyl-bicyclo [2.2.1]-heptane, 2-isocyanatomethyl-3-(3-isocyanatopropyl)-6-(2-isocyanatoethyl)-bicyclo[2.2.1]-heptane, 2-isocyanatomethyl-2-(3-isocyanatopropyl)-5-(2-isocyanatoethyl)-bicycle[2.2.1]-heptane and 2-isocyanatomethyl-2-(3-isocyanatopropyl)-6-(2-isocyanatoethyl)-bicycle[2.2.1]-heptane. In a preferred embodiment of the present invention, $R_2$ is a residue of a cycloaliphatic diisocyanate selected from, for example, isophorone diisocyanate, cyclohexane diisocyanate, methylcyclohexane diisocyanate, bis (isocyanatomethyl) cyclohexane, bis(isocyanatocyclohexyl)methane, bis (isocyanatocyclohexyl)-2,2-propane, bis(isocyanatocyclohexyl)-1,2-ethane, and mixtures thereof. When $R_2$ is a residue of a diisocyanate, such as a cycloaliphatic diisocyanate, j of general formula II is 2.

Classes of polyamines of which $R_2$ may be a residue, include, aromatic polyamines, aliphatic polyamines, cycloaliphatic polyamines, each having at least two primary amines, and mixtures thereof. As is known to the skilled artisan, polyisocyanates are typically prepared from the corresponding polyamine precursors having two or more primary amine groups. Accordingly, specific examples of polyamines within these recited classes include, but are not limited to, polyamine precursors corresponding to those polyisocyanates as recited previously herein.

With further reference to general formula II, $R_3$ is a residue of a material having a single hydroxy group and one or more allyl groups. The mono-hydroxy functional material of which $R_3$ is a residue is free of acryloyl groups and methacryloyl groups. The allyl group may be an unsubstituted allyl group or a substituted allyl group, as represented by the following general formula III,

III

$$H_2C{=}C(R_4){-}CH_2{-}$$

wherein R, is hydrogen, halogen or a $C_1$ to $C_4$ alkyl group. More typically, $R_4$ is hydrogen and consequently general formula III represents the unsubstituted allyl group, $H_2C=CH-CH_2-$ . More specifically, the allyl group of the material having a single hydroxy group, of which $R_3$ is a residue, may be an allyl ether, an allyl carbonate or an allyl ester group. The material of which $R_3$ is a residue typically has at least one allyl ether group.

The mono-hydroxy functional material of which $R_3$ is a residue may be selected from aromatic alcohols, aliphatic alcohols, cycloaliphatic alcohols, poly(alkylene glycols), each having at least one allyl group, and combinations thereof. Examples of aromatic alcohols having at least one allyl group include, but are not limited to, allyloxy phenol, e.g., 4-allyloxy phenol, allyloxybenzyl alcohol, e.g., 4-allyloxybenzyl alcohol, and 4-allyl-2,6-dimethoxyphenol. Cycloaliphatic alcohols having at least one allyl group of which $R_3$ may be a residue include, for example, allyloxymethyl cyclohexylmethanols, e.g., 4-allyloxymethyl cyclohexylmethanol.

Examples of aliphatic alcohols having at least one allyl group, of which $R_3$ may be a residue include, but are not limited to, allyl alcohol, substituted allyl alcohols, e.g., methallyl alcohol, allyl ethers of alkylene glycols, e.g., $C_2$-$C_4$ alkylene glycols, such as, ethylene glycol allyl ether and 1,2- or 1,3-propylene glycol allyl ether. A preferred class of aliphatic alcohols, of which $R_3$ may be a residue, are poly(allyl ethers) of aliphatic polyols, e.g., trimethylol propane di (allyl ether), trimethylol ethane di(allyl ether), pentaerythritol tri(allyl ether), and di-trimethylolpropane tri(allyl ether).

Poly(alkylene glycols) of which $R_3$ may be a residue include, for example, homopolymeric, block copolymeric, e.g., diblock and triblock copolymeric, and random copolymeric poly(alkylene glycols), such as poly($C_2$-$C_4$ alkylene glycols), having a single allyl ether group and a single hydroxy group. Examples of poly(alkylene glycol) allyl ethers of which R, may be a residue include, for example, poly(ethylene glycol) allyl ether, poly(1,2-propylene glycol) allyl ether, poly(1,2-butylene glycol) allyl ether, poly(ethylene glycol)-b-poly(1,2-propylene glycol) allyl ether, poly(1,2-propylene glycol)-b-poly(ethylene glycol) allyl ether, poly(1,2-butylene glycol)-b-poly(ethylene glycol) allyl ether, poly(ethylene glycol)-b-poly(1,2-butylene glycol) allyl ether and poly(ethylene glycol)-b-poly(1,2-propylene glycol)-b-poly(1,2-butylene) allyl ether.

The poly(alkylene glycol) allyl ethers of which $R_3$ may be a residue have at least 2 alkylene ether units. For example, diethylene glycol allyl ether has two (2) ethylene ether units, i.e., $H_2C=CHCH_2O-(-CH_2CH_2-O-)_2-H$. Typically, the poly(alkylene glycol) allyl ether has less than 100 alkylene ether units, e.g., less than 50, less than 20 or less than 15 alkylene ether units. The poly(alkylene glycol) allyl ether may have a number of alkylene ether units ranging between any combination of these values, inclusive of the recited values, e.g., from 2 to 100, 2 to 50, 2 to 20 or 2 to 15 alkylene ether units.

In an embodiment of the present invention, the material of which $R_3$ is a residue is selected from a $C_2$-$C_4$ alkylene glycol allyl ether, a poly($C_2$-$C_4$ alkylene glycol) allyl ether, trimethylol propane di(allyl ether), trimethylol ethane di(allyl ether), pentaerythritol tri(allyl ether), di-trimethylolpropane tri(allyl ether) and mixtures thereof. In a preferred embodiment of the present invention, the material of which $R_3$ is a residue is selected from poly(ethylene glycol) allyl ether, poly(1,2-propylene glycol) allyl ether and mixtures thereof.

The polymerizable organic composition of the present invention includes also a radically polymerizable first monomer as described above with reference to general formula I, which may be further described as a polyol(allyl carbonate) monomer. Polyol(allyl carbonate) monomers that may be used in the aforedescribed polymerizable organic composition are allyl carbonates of, for example, linear or branched aliphatic polyols, e.g., aliphatic glycol bis(allyl carbonate) compounds, and cycloaliphatic polyols. The scope of the present invention also includes allyl carbonates of aromatic polyols, e.g., 4,4'-isopropylidenediphenol bis(allyl carbonate). These monomers may further be described as unsaturated polycarbonates of polyols, e.g., glycols. The polyol(allyl carbonate) monomer may be prepared by procedures well known in the art, e.g., as described in U.S. Patents 2,370,567 and 2,403,113.

In reference to general formula I, $R_1$ is an allyl group, which may be described with reference to general formula III. The allyl group $R_1$ of general formula I may be substituted at the 2-position with a halogen, most notably chlorine or bromine, or an alkyl group containing from 1 or 4, e.g., 1 to 2, carbon atoms, in which case $R_1$ is a substituted allyl group. More commonly, and with reference to general formula III, $R_4$ is hydrogen and consequently $R_1$ of general formula I is the unsubstituted allyl group, $H_2C=CH-CH_2-$ .

With reference to general formula I, R is a polyvalent residue of a polyol, which can, for example, be an aliphatic or cycloaliphatic polyol, containing 2, 3 or 4 hydroxy groups. Typically, the polyol contains 2 hydroxy groups, i.e., a glycol. When the polyol is an aliphatic polyol, it may be linear or branched and contain from 2 to 10 carbon atoms. Commonly, the aliphatic polyol is an alkylene glycol having from 2 to 4 carbons atoms, e.g., ethylene glycol, propylene glycol, trimethylene glycol, tetramethylene glycol, or a poly($C_2$-$C_4$ alkylene glycol), e.g., diethylene glycol, triethylene glycol, etc.

Specific examples of polyol(allyl carbonate) monomers that may be used in the present invention include, but are not limited to, ethylene glycol bis(2-chloroallyl carbonate), ethylene glycol bis(allyl carbonate), diethylene glycol bis(2-methylallyl carbonate), diethylene glycol bis(allyl carbonate), triethylene glycol bis(allyl carbonate), propylene glycol bis(2-ethylallyl carbonate), 1,3-propanediol bis(allyl carbonate), 1,3-butanediol bis(allyl carbonate), 1,4 butanediol bis(2-bromoallyl carbonate), dipropylene glycol bis(allyl carbonate), trimethylene glycol bis(2-ethylallyl carbonate),

pentamethylene glycol bis(allyl carbonate), 1,4-cyclohexanediol bis(allyl carbonate) and 4,4'-isopropylidenebiscyclohexanol bis(allyl carbonate).

A preferred polyol(allyl carbonate) monomer in the composition of the present invention is diethylene glycol bis(allyl carbonate). Commercially available examples of diethylene glycol bis(allyl carbonate) monomers include CR-39® monomer and HIGH ADC CR-39® monomer, Chemical Abstracts (CAS) No. 142-22-3, available from PPG Industries, Inc.

A detailed description of polyol(allyl carbonate) monomers that may be used in the polymerizable organic compositions of the present invention may be found in U.S. Patent No. 4,637,698 at column 3, line 33 through column 5, line 61.

As used in the present description with reference to the radically polymerizable monomer represented by general formula I, the term "polyol(allyl carbonate) monomer" and like names, e.g., diethylene glycol bis(allyl carbonate), is intended to mean and include the named monomers or prepolymers thereof and any related monomer or oligomer species contained therein.

The polyol(allyl carbonate) monomer is present in the polymerizable composition of the present invention in a major amount, e.g., from 51 percent by weight to 99.9 percent by weight, based on the total weight of the polymerizable composition. Typically, the polyol(allyl carbonate) monomer is present in the polymerizable composition of the present invention in an amount of at least 90 percent by weight, preferably at least 95 percent by weight, and more preferably at least 97 percent by weight, based on the total weight of the polymerizable composition. Also, the polyol(allyl carbonate) monomer is typically present in the composition in an amount of not greater than 99.9 percent by weight, preferably not greater than 99.8 percent by weight, and more preferably not greater than 99.7 percent by weight, based on the total weight of the polymerizable composition. The polyol(allyl carbonate) monomer may be present in the composition of the present invention in an amount ranging between any combination of these values, inclusive of the recited values.

Polymerization of the polymerizable composition of the present invention may be accomplished by adding to the composition an initiating amount of material capable of generating free radicals, such as organic peroxy compounds, i.e., an initiator. Methods for polymerizing polyol(allyl carbonate) compositions are well known to the skilled artisan and any of those well known techniques may be used to polymerize the aforedescribed polymerizable compositions.

Suitable examples of organic peroxy compounds, that may be used as initiators include: peroxymonocarbonate esters, such as tertiarybutylperoxy isopropyl carbonate; peroxydicarbonate esters, such as di(2-ethylhexyl) peroxydicarbonate, di(secondary butyl) peroxydicarbonate and diisopropylperoxydicarbonate; diacylperoxides, such as 2,4-dichlorobenzoyl peroxide, isobutyryl peroxide, decanoyl peroxide, lauroyl peroxide, propionyl peroxide, acetyl peroxide, benzoyl peroxide, p-chlorobenzoyl peroxide; peroxyesters such as t-butylperoxy pivalate, t-butylperoxy octylate, and t-butylperoxyisobutyrate; methylethylketone peroxide, acetylcyclohexane sulfonyl peroxide, and azobisisobutyronitrile. Preferred initiators are those that do not discolor the resulting polymerizate. A preferred initiator is diisopropyl peroxydicarbonate.

The amount of initiator used to initiate and polymerize the polymerizable compositions of the present invention may vary and will depend on the particular initiator used. Only that amount that is required to initiate and sustain the polymerization reaction is required, i.e., an initiating amount. With respect to the preferred peroxy compound, diisopropyl peroxydicarbonate, typically between 2.0 and 5.0 parts of that initiator per 100 parts of the polymerizable organic composition (phm) may be used. More usually, between 2.5 and 4.0 phm is used to initiate the polymerization. The amount of initiator and the consequent cure cycle should be adequate to produce a polymerizate having a 15 second Barcol hardness of at least 1, preferably, at least 4, e.g., from 4 to 35. Typically, the cure cycle involves heating the polymerizable organic composition in the presence of the initiator from room temperature to 85°C over a period of from 15 hours to 30 hours.

Various conventional additives may be incorporated into the polymerizable composition of the present invention. Such conventional additives may include light stabilizers, heat stabilizers, ultraviolet light absorbers, mold release agents, pigments and flexibilizing additives that are not radically polymerizable, e.g., alkoxylated phenol benzoates and poly(alkylene glycol) dibenzoates. Conventional additives are typically present in the compositions of the present invention in amounts totaling less than 10 percent by weight, more typically less than 5 percent by weight, and commonly less than 3 percent by weight, based on the total weight of the polymerizable composition.

Polymerizates obtained from polymerization of polymerizable organic compositions of the present invention will be solid, transparent and substantially free of tinting defects. Solid articles that may be prepared from the polymerizable compositions of the present invention include, but are not limited to, optical lenses, such as plano and ophthalmic lenses, e.g. a lens having a positive diopter, sun lenses or sunglasses, windows, automotive transparencies, e.g., windshields, sidelights and backlights, and aircraft transparencies, etc.

The present invention is more particularly described in the following examples, which are intended to be illustrative only, since numerous modifications and variations therein will be apparent to those skilled in the art. Unless otherwise specified, all parts and percentages are by weight.

## Casting Composition Examples

The following summarizes polymerizable casting compositions that are comparative and compositions that are in accordance with the present invention. Casting composition A is a comparative composition, and Casting compositions B and C represent compositions according to the present invention.

| Casting Compositions | | | |
|---|---|---|---|
| Ingredients | Casting Composition A | Casting Composition B | Casting Composition C |
| CR-39® monomer (a) | 100.0 | 99.0 | 99.0 |
| diisopropyl peroxydicarbonate (b) | 2.6 | 3.0 | 3.2 |
| Second monomer (c) | 0 | 1.0 | 0 |
| Second monomer (d) | 0 | 0 | 1.0 |

(a) CR-39® diethylene glycol bis(allyl carbonate) monomer available commercially from PPG Industries, Inc.

(b) In each of casting compositions B and C, the level of diisopropyl peroxydicarbonate initiator was adjusted such that tinted polymerizates obtained from these compositions had substantially the same percent transmission as tinted polymerizates obtained (under the same tinting conditions) from composition A, e.g., having about 35 percent transmission. The percent transmittance was determined using a HunterLab Model ColorQuest II colorimeter employing the CIE Tristimulus XYZ scale, illuminant D65 and 10°C observer.

(c) Diallyl urethane monomer obtained from Sartomer Company, Inc. and having the designation NTX-4434.

(d) Tetraallyl urethane monomer obtained from Sartomer Company, Inc. and having the designation NTX-4439.

## Cast Lens Examples

The casting compositions A - C were each mixed at room temperature and injected separately into glass lens molds used to prepare circular lenses having a +5 diopter and an outer rim diameter of 6.5 cm. Twenty (20) lens molds were filled at a time and their contents polymerized using the same cure cycle. The cure cycle used involved heating the molds in an electric forced air oven in stages from 48°C to 85 °C over a period of 18 hours, followed by cooling to and holding at 60°C until demolding of the lenses.

The cast lenses were then tinted by imbibing them with a black dye. An aqueous tinting solution of 1 part BPI® Molecular Catalytic™ Black Dye, commercially available from Brain Power Incorporated, and 10 parts deionized water was heated to and held at a temperature of 94°C - 95°C. The lenses cast from casting compositions A - C were fully immersed in the heated dye solution for a period of 5 minutes, after which they were thoroughly rinsed with deionized water. The tinted lenses were evaluated for tinting defects, the results of which are summarized in Table 1.

TABLE 1

| Evaluation of Tinted Lenses | | | |
|---|---|---|---|
| Casting Composition | Number of Tinted Lenses Evaluated | Number of Tinted Lenses Having Tinting Defects (e) | Percent of Tinted Lenses Having Tinting Defects (f) |
| A | 228 | 57 | 25 |
| B | 529 | 30 | 5.7 |
| C | 436 | 23 | 5.3 |

(e) The lenses were evaluated for tinting defects by means of visual naked eye inspection. Tinting defects were observed as having a lighter colored vein or fern-like appearance relative to the rest of the tinted lens.

(f) 100 x (the number of tinted lenses observed to have tinting defects / the number of tinted lenses evaluated). For example, with casting composition A: 100 x (57/228) = 25 percent (%).

The results summarized in Table 1 show that articles, e.g., lenses, cast from polymerizable compositions according to the present invention, such as Compositions B and C, have fewer tinting defects than lenses cast from comparative compositions, such as Composition A.

The present invention has been described with reference to specific details of particular embodiments thereof. It is not intended that such details be regarded as limitations upon the scope of the invention except insofar as and to the extent that they are included in the accompanying claims.

## Claims

1. A polymerizable composition comprising:

   a) from 51 to 99.9 percent by weight based on the total weight of the polymerizable composition of a radically polymerizable first monomer represented by the following general formula,

   $$R\text{-}[\text{-}O\text{-}C(O)\text{-}O\text{-}R_1]_i$$

   wherein R is a polyvalent residue of a polyol having at least two hydroxy groups, $R_1$ is an allyl group, and i is a whole number from 2 to 4; and
   b) from 0.1 to 49 percent by weight based on the total weight of the polymerizable composition of a radically polymerizable second monomer represented by the following general formula,

   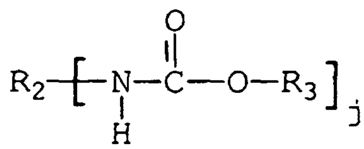

   wherein $R_2$ is a polyvalent linking group that is free of urethane linkages; $R_3$ is a residue of a material having a single hydroxy group and at least one allyl group. $R_3$ being free of urethane linkages; and j is a number from 2 to 4.

2. The polymerizable composition of claim 1 wherein said second monomer (b) is present in said composition in an amount of from 0.1 percent by weight to 10 percent by weight, based on the total weight of said polymerizable composition.

3. The polymerizable composition of claim 1 wherein $R_2$ is a residue of a polyisocyanate selected from aromatic polyisocyanates, aliphatic polyisocyanates, cycloaliphatic polyisocyanates and mixtures thereof: and the material of which $R_3$ is a residue is selected from, aromatic alcohols, aliphatic alcohols, cycloaliphatic alcohols, poly(alkylene glycols), each having at least one allyl group, and mixtures thereof.

4. The polymerizable composition of claim 3 wherein $R_2$ is a residue of a cycloaliphatic diisocyanate selected from isophorone diisocyanate, cyclohexane diisocyanate, methylcyclohexane diisocyanate, bis(isocyanatomethyl)cyclohexane, bis(isocyanatocyclohexyl)-methane, bis(isocyanatocyclohexyl)-2,2-propane, bis(isocyanatocyclohexyl)-1,2-ethane, and mixtures thereof, and j is 2.

5. The polymerizable composition of claim 3 wherein the material of which $R_3$ is a residue is selected from $C_2$-$C_4$ alkylene glycol allyl ether, poly($C_2$-$C_4$ alkylene glycol) allyl ether, trimethylol propane di(allyl ether), trimethylol ethane di(allyl ether), pentaerythritol tri(allyl ether), di-trimethylolpropane tri(allyl ether) and mixtures thereof.

6. The polymerizable composition of claim 5 wherein the material of which $R_3$ is a residue is selected from poly (ethylene glycol) allyl ether, poly(1,2-propylene glycol) allyl ether and mixtures thereof.

7. The polymerizable composition of claim 1 wherein R is a residue of a poly($C_2$-$C_4$ alkylene glycol), and i is 2.

8. The polymerizable composition of claim 7 wherein R is a residue of diethylene glycol.

9. The polymerizate obtained by polymerizing the composition according to any of the preceding claims.

10. The polymerizate of claim 9 wherein said polymerizate is a lens having a positive diopter.

## Patentansprüche

1. Polymerisierbare Zusammensetzung enthaltend:

a) 51 bis 99 Gew.-%, bezogen auf das Gesamtgewicht der polymerisierbaren Zusammensetzung, eines radikalisch polymerisierbaren ersten Monomers, das durch die folgende allgemeine Formel wiedergegeben ist,

$$R\text{-}[\text{-}O\text{-}C(O)\text{-}O\text{-}R_1]_i,$$

worin R ein mehrbindiger Rest eines Polyols mit wenigstens zwei Hydroxygruppen ist, $R_1$ eine Allylgruppe ist und i eine ganze Zahl von 2 bis 4 ist, und

b) 0,1 bis 49 Gew.-%, bezogen auf das Gesamtgewicht der polymerisierbaren Zusammensetzung, eines radikalisch polymerisierbaren zweiten Monomers, das durch die folgende allgemeine Formel wiedergegeben ist,

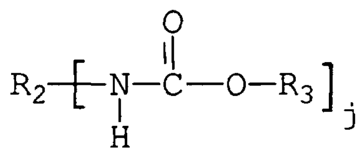

,

worin $R_2$ eine mehrbindige Verbindungsgruppe ist, die frei von Urethanverknüpfungen ist, $R_3$ ein Rest eines Stoffes mit einer einzigen Hydroxygruppe und wenigstens einer Allylgruppe ist, $R_3$ frei von Urethanverknüpfungen ist und j eine Zahl von 2 bis 4 ist.

**2.** Polymerisierbare Zusammensetzung nach Anspruch 1, wobei dieses zweite Monomer (b) in dieser Zusammensetzung in einer Menge von 0,1 Gew.-% bis 10 Gew.-%, bezogen auf das Gesamtgewicht dieser polymerisierbaren Zusammensetzung, vorhanden ist.

**3.** Polymerisierbare Zusammensetzung nach Anspruch 1, worin $R_2$ ein Rest eines Polyisocyanats ist, ausgewählt aus aromatischen Polyisocyanaten, aliphatischen Polyisocyanaten, cycloaliphatischen Polyisocyanaten und Mischungen davon, und der Stoff, von dem $R_3$ ein Rest ist, ausgewählt ist aus aromatischen Alkoholen, aliphatischen Alkoholen, cycloaliphatischen Alkoholen, Poly(alkylenglykolen), die jeweils wenigstens eine Allylgruppe aufweisen, und Mischungen davon.

**4.** Polymerisierbare Zusammensetzung nach Anspruch 3, worin $R_2$ ein Rest eines cycloaliphatischen Diisocyanats ist, ausgewählt aus Isophorondiisocyanat, Cyclohexandiisocyanat, Methylcyclohexandiisocyanat, Bis(isocyanatomethyl)cyclohexan, Bis(isocyanatocyclohexyl)-methan, Bis(isocyanatocyclohexyl)-2-2-propan, Bis(isocyanatocyclohexyl)-1-2-ethan und Mischungen davon, und j gleich 2 ist.

**5.** Polymerisierbare Zusammensetzung nach Anspruch 3, wobei der Stoff, von dem $R_3$ ein Rest ist, ausgewählt ist aus $C_2$-$C_4$-Alkylenglykolallylether, Poly($C_2$-$C_4$-Alkylenglykol)allylether, Trimethylolpropandi(allylether), Trimethylolethandi(allylether), Pentaerythritoltri(allylether), Ditrimethylolpropantri(allylether), und Mischungen davon.

**6.** Polymerisierbare Zusammensetzung nach Anspruch 5, wobei der Stoff, von dem $R_3$ ein Rest ist, ausgewählt ist aus Poly(ethylenglykol)-allylether, Poly(1,2-propylenglykol)allylether und Mischungen davon.

**7.** Polymerisierbare Zusammensetzung nach Anspruch 1, worin R ein Rest eines Poly($C_2$-$C_4$-Alkylenglykol)s ist und i gleich 2 ist.

**8.** Polymerisierbare Zusammensetzung nach Anspruch 7, worin R ein Rest von Diethylenglykol ist.

**9.** Polymerisat, erhältlich durch Polymerisieren der Zusammensetzung nach einem der vorstehenden Ansprüche.

**10.** Polymerisat nach Anspruch 9, wobei dieses Polymerisat eine Linse mit einer positiven Dioptrie ist.

**Revendications**

**1.** Composition polymérisable comprenant :

a) de 51 à 99,9% en poids par rapport au poids total de la composition polymérisable d'un premier monomère polymérisable radicalairement représenté par la formule générale :

$$R\text{-}[\text{-}O\text{-}C(O)\text{-}O\text{-}R_1]_i$$

dans laquelle R est un résidu polyvalent d'un polyol comportant au moins deux groupes hydroxy, $R_1$ est un groupe allyle, et i est un nombre entier de 2 à 4; et

b) de 0,1 à 49% en poids par rapport au poids total de la composition polymérisable d'un second monomère polymérisable radicalairement représenté par la formule générale suivante :

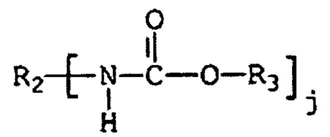

dans laquelle $R_2$ est un groupe de liaison polyvalent qui est exempt de liaisons uréthanne, $R_3$ est un résidu d'une matière comportant un seul groupe hydroxy et au moins un groupe allyle, $R_3$ étant exempt de liaisons uréthanne, et j est un nombre de 2 à 4.

**2.** Composition polymérisable suivant la revendication 1, dans laquelle le second monomère (b) est présent dans ladite composition en une quantité de 0,1% en poids à 10% en poids, par rapport au poids total de la composition polymérisable précitée.

**3.** Composition polymérisable suivant la revendication 1, dans laquelle $R_2$ est un résidu d'un polyisocyanate choisi parmi les polyisocyanates aromatiques, les polyisocyanates aliphatiques, les polyisocyanates cycloaliphatiques et leurs mélanges, et la matière dont $R_3$ est un résidu est choisie parmi les alcools aromatiques, les alcools aliphatiques, les alcools cycloaliphatiques, les poly(alkylène glycols), chacun comportant au moins un groupe allyle, et leurs mélanges.

**4.** Composition polymérisable suivant la revendication 3, dans laquelle $R_2$ est un résidu d'un diisocyanate cycloaliphatique choisi parmi l'isophorone diisocyanate, le cyclohexane diisocyanate, le méthylcyclohexane diisocyanate, le bis(isocyanatométhyl)cyclohexane, le bis(isocyanatocyclohexyl)méthane, le bis(isocyanatocyclohexyl)-2,2-propane, le bis(isocyanatocyclohexyl)-1,2-éthane, et leurs mélanges, et j est égal à 2.

**5.** Composition polymérisable suivant la revendication 3, dans laquelle la matière dont $R_3$ est un résidu est choisie parmi les éthers allyliques d'alkylène glycol en $C_2$-$C_4$, les éthers allyliques de poly(alkylène glycol en $C_2$-$C_4$), le di(éther allylique) de triméthylolpropane, le di(éther allylique) de triméthylol éthane, le tri(éther allylique) de pentaérythritol, le tri(éther allylique) de di-triméthylolpropane et leurs mélanges.

**6.** Composition polymérisable suivant la revendication 5, dans laquelle la matière dont $R_3$ est un résidu est choisie parmi l'éther allylique de poly(éthylène glycol), l'éther allylique de poly(1,2-propylène glycol) et leurs mélanges.

**7.** Composition polymérisable suivant la revendication 1, dans laquelle R est un résidu d'un poly(alkylène glycol en $C_2$-$C_4$), et i est égal à 2.

**8.** Composition polymérisable suivant la revendication 7, dans laquelle R est un résidu de diéthylène glycol.

**9.** Polymérisat obtenu par la polymérisation de la composition suivant l'une quelconque des revendications précédentes.

**10.** Polymérisat suivant la revendication 9, dans lequel ledit polymérisat est une lentille ayant une dioptrie positive.

FIGURE 1